(19) Europäisches Patentamt
European Patent Office
Office européen des brevets

(11) Veröffentlichungsnummer: **0 181 601**
**A1**

(12) # EUROPÄISCHE PATENTANMELDUNG

(21) Anmeldenummer: 85114109.3

(22) Anmeldetag: 06.11.85

(51) Int. Cl.4: **C 09 K 19/60**
C 09 K 19/08

(30) Priorität: 16.11.84 DE 3441937

(43) Veröffentlichungstag der Anmeldung:
21.05.86 Patentblatt 86/21

(84) Benannte Vertragsstaaten:
CH DE FR GB LI

(71) Anmelder: BAYER AG
Konzernverwaltung RP Patentabteilung
D-5090 Leverkusen 1 Bayerwerk(DE)

(72) Erfinder: Claussen, Uwe, Dr.
Carl-Rumpff-Strasse 29
D-5090 Leverkusen 1(DE)

(54) **Flüssigkristallines Material.**

(57) Farbstoffhaltiges flüssigkristallines Material, das ein Gemisch von mindestens zwei Verbindungen, die eine nematische Phase positiver dielektrischer Anisotropie bilden, der allgemeinen Formel

$$R_1\text{-}(A_1)_m\text{-}Z_1\text{-}A_2\text{-}Z_2\text{-}(A_3)_n\text{-}R_2 \qquad \text{I}$$

enthält, wobei $A_1$, $A_2$, $A_3$, $R_1$, $R_2$, $Z_1$, $Z_2$, m und n die in der Beschreibung angegebenen Bedeutungen haben, wobei dieses Gemisch 10-60 Gew.-% mindestens einer cyangruppenhaltigen Verbindung und 0-1 Gew.-% gegebenenfalls mindestens einer estergruppenhaltigen Verbindungen enthält, findet Verwendung in Guest-Host-Anzeigen.

EP 0 181 601 A1

0181601

BAYER AKTIENGESELLSCHAFT
Konzernverwaltung RP
Patentabteilung

5090 Leverkusen, Bayerwerk

PG/Kü-c

# Flüssigkristallines Material

In den letzten Jahren sind nematische flüssigkristalline Mischungen entwickelt worden, die einen weiten Temperaturbereich abdecken. Insbesondere konnte erreicht werden, auch bei tiefen Temperaturen, bis -40°C zuverlässig, schaltbare Materialien zu erhalten. Dies ist ein Ergebnis einer ausgedehnten Materialforschung, die zur Verminderung der polare Gruppen enthaltende Verbindungsklassen in den flüssigkristallinen Mischungen geführt hat (Mol. Cryst. Liq. Cryst. 94, 139 (1983)).

Während eine Mischung, die ganz oder überwiegend aus Cyangruppen enthaltenden Substanzen besteht, bei Temperaturen unter -10°C eine Viskositätszunahme erfährt, die sie für den technischen Einsatz unbrauchbar langsam macht, können Mischungen, bei denen dieser Anteil nur etwa die Hälfte oder weniger ausmacht, bis zu -40°C ausreichend schnell sein. Diese Mischungen wurden speziell für die sogenannte TN-Zelle entwickelt und hier auch in technischem Umfang eingesetzt.

Die Guest-Host-Zelle unterscheidet sich prinzipiell von der TN-Zelle dadurch, daß die Funktion des einen starren Polarisators von dem dichroitischen Farbstoff übernommen wird. Der Farbstoff dient quasi als schaltbarer Polarisator. Es ist deswegen verständlich, daß erwartet wird, durch Lösen eines Farbstoffs in einer für TN-Zellen optimierten FK-Mischung, ein für Guest-Host-Zellen geeignetes Material zu erhalten.

Neuere Untersuchungen haben gezeigt (Mol. Cryst. Liq. Cryst. 95, 71-89 (1983) und ibid. 94, 327 (1983)), daß diese Vermutung zutrifft und darüber hinaus wird die Auffassung vertreten, daß 2-3 % eines Farbstoffs die charakteristischen physikalischen Eigenschaften einer nematischen Phase praktisch nicht beeinflussen. Die genannten Literaturstellen behandeln vorzugsweise die Abhängigkeit des Ordnungsgrads von verschiedenen flüssigkristallinen Mischungen.

Um die Farbstoff-Guest-Host-Zelle auch bei niedrigen Temperaturen verwendbar zu machen, läßt sie sich aber nicht in der eben beschriebenen Weise optimieren, denn mit der Abnahme polarer Gruppen in der Mischung geht die Verminderung der Farbstofflöslichkeit einher. Eine gute Löslichkeit ist andererseits notwendig, um eine ausreichende Farbdichte zu erzielen. Darüber hinaus kann sich die Viskosität der Mischung durch die Wechselwirkung der Farbstoffe untereinander oder mit den Bestandteilen der nematischen Phase zusätzlich erhöhen.

Als Folge davon erhöht sich die Schaltzeit der Zelle so weit, daß die Verwendung in Displays insbesondere

bei tiefen Temperaturen unmöglich wird. Bis heute ist dieses Problem nicht befriedigend gelöst; dies hat die breite Einführung der technisch einfach und wirtschaftlich herstellbaren Guest-Host-Anzeige bisher behindert.

Es ist Aufgabe der vorliegenden Erfindung, flüssigkristallines Material für Farbstoff-Guest-Host-Zellen bereitzustellen, das eine ausreichende Farbdichte zuläßt und auch bei tiefen Temperaturen ausreichend schnell geschaltet werden kann.

Wir haben nun überraschend gefunden, daß farbstoffhaltiges flüssigkristallines Material, das ein Gemisch von mindestens zwei Verbindungen, die eine nematische Phase positiver dielektrischer Anisotropie bilden, der allgemeinen Formel

$$R_1-(A_1)_m-Z_1-A_2-Z_2-(A_3)_n-R_2 \qquad I$$

wobei

$R_1$, $R_2$ $C_1$-$C_{10}$-Alkyl, das durch 1-2 O-Atome unterbrochen sein kann, $C_1$-$C_{10}$-Alkoxy, das durch 1 oder 2 O-Atome unterbrochen sein kann, F, Cl, Br, -CN, $-CF_3$, $-NO_2$,

$A_1$, $A_2$, $A_3$ gegebenenfalls substituiertes 1,4-Phenylen-, 1,4-Cyclohexylen, 1,3-Dioxan-2,5-diyl-, Piperidin-1,4-diyl-, 1,4-Bicyclo-/2,2,2/-octylen- und Pyrimidin-2,5-diyl-Gruppen,

$Z_1$, $Z_2$ eine direkte Bindung, $-O-\underset{\underset{O}{\|}}{C}-$, $-\underset{\underset{O}{\|}}{C}-O-$, $-CH_2O-$, $-OCH_2-$, $-CH_2CH_2-$,

m 1 und 2 sowie

n 0 und 1 bezeichnen, wobei für m = 2 die beiden Gruppen $A_1$ gleich oder verschieden sind enthält, und dadurch gekennzeichnet ist, daß das Gemisch 10-60 Gew.-% mindestens einer cyangruppenhaltigen Verbindung und 0-1 Gew.-% gegebenenfalls mindestens einer estergruppenhaltigen Verbindung enthält, beim Einsatz in Guest-Host-Anzeigen zu erheblich verbesserten Schaltzeiten führt.

Vorzugsweise werden solche Gemische eingesetzt, die 20-40 Gew.-% mindestens einer cyangruppenhaltigen Verbindung enthalten.

Weiterhin bevorzugt sind Gemische, die 0-0,5 Gew.-% gegebenenfalls mindestens einer estergruppenhaltigen Verbindung enthalten.

Die Gruppen $A_1$, $A_2$, $A_3$ in Formel I können beispielsweise durch 1, 2, 3 oder 4 F-Atome, Cl-Atome, Br-Atome, -CN- oder $-CF_3$-Gruppen substituiert sein.

Bevorzugt handelt es sich bei dem erfindungsgemäßen flüssigkristallinen Material um ein Gemisch aus mindestens einer Verbindung der Formeln

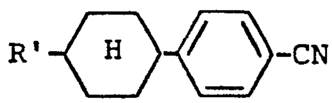

II

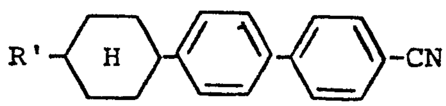

III

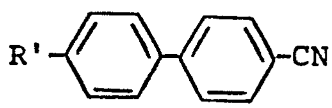

IV

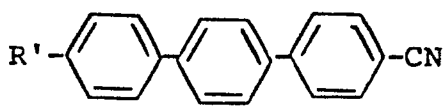

V

und mindestens einer Verbindung der Formel

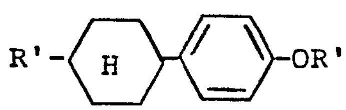

VI

wobei erfindungsgemäß gelten muß, daß dieses Gemisch farbstoffhaltig sein muß und 10-60 Gew.-% einer cyangruppenhaltigen Verbindung und 0-1 Gew.-% einer estergruppenhaltigen Verbindung enthält.

In den Formeln II-VI bezeichnen R' $C_1$-$C_{10}$-Alkyl, das durch 1 oder 2 O-Atome unterbrochen sein kann. Beispiele für R' sind: Ethyl, Propyl, Butyl, Pentyl, Hexyl, Heptyl.

Die erfindungsgemäßen flüssigkristallinen Materialien enthalten vorzugsweise Farbstoffe der Azo- und/oder Anthrachinonreihe.

Geeignete Azofarbstoffe sind z.B. aus DE-OS 2 627 215, US-P 4 128 497, EP 55 838, EP 87 248, EP 80 153, EP 67 354 und DE-OS 2 631 428 bekannt.

Geeignete Anthrachinonfarbstoffe sind beispielsweise aus EP 26 004, DE-OS 2 920 730, DE-OS 3 036 853, EP 38 460, EP 49 035, EP 93 367 und EP 59 095 bekannt.

Bevorzugt sind Farbstoffmischungen, die Anthrachinonfarbstoffe der Formel

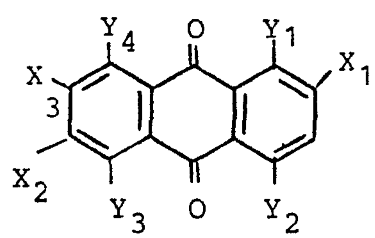

enthalten,

in der

$Y_1$, $Y_2$, $Y_3$, $Y_4$ Wasserstoff, Halogen, Nitro, Amino, Alkylamino, Arylamino, Acylamino, Cycloalkylamino, Aralkylamino, Alkoxy, Cycloalkoxy, Aryloxy, Aralkoxy, Alkylthio, Cycloalkylthio, Arylthio, Aralkylthio, Hydroxy oder Mercapto, wobei die genannten Kohlenwasserstoffreste substituiert sein können, mit der Maßgabe, daß mindestens einer der Substituenten $Y_1$-$Y_4$ ≠ H ist,

$X_1$, $X_2$, $X_3$ Wasserstoff, Halogen, $-T_1$, $-OT_1$, $-ST_1$, $-CN$, $-CF_3$, $-COZT_1$,

Z -O- oder -NH-,

$T_1$ gegebenenfalls substituiertes Alkyl, wobei die Alkylkette durch ein O-Atom oder mehrere nicht nachbarständige O-Atome unterbrochen sein kann, vorzugsweise $C_1$-$C_{10}$-Alkyl, das durch 1 oder 2 O-Atome unterbrochen sein kann, gegebenenfalls substituiertes Aryl, gegebenenfalls substituiertes Cycloalkyl, gegebenenfalls substituiertes Aralkyl, oder einen gegebenenfalls substituierten heterocyclischen Rest bezeichnen.

Substituierte 1,4,5,8-Tetraaminoanthrachinone und Arylthiogruppen haltige Anthrachinonfarbstoffe sind besonders bevorzugt.

Ein weiterer Vorteil der erfindungsgemäßen farbstoffhaltigen flüssigkristallinen Materialien ist, daß die

bei Wegfall der estergruppenhaltigen Verbindung hervorgerufene Erniedrigung des Klärpunktes der Mischung durch den Farbstoffeinsatz aufgehoben und in einigen Fällen sogar überkompensiert wird, ohne daß eine Erhöhung der Viskosität mit abnehmender Temperatur eintritt.

Beispiel

In einer Flüssigkristallmischung enthaltend

| | | |
|---|---|---|
| 22 | Gew.-% | 4-(4-Cyanophenyl)-cyclohexylalkane ($C_3$: 7 %; $C_5$: 15 %) |
| 15 | Gew.-% | 4-Cyanobiphenyl-4'-alkane ($C_2$: 6 %; $C_3$: 3 %; $C_4$: 6 %) |
| 5,5 | Gew.-% | 4-(4-Cyanobiphenyl)-cyclohexylpentan |
| 5,5 | Gew.-% | 4-Cyanoterphenyl-4'-pentan |
| 18 | Gew.-% | 1-(4-Pentylcyclohexyl)-4-(4-butylcyclohexylethylen)-benzol |
| 8,5 | Gew.-% | 4-(4-Butylcyclohexyl)-4'-(4-pentylcyclohexylethylen)-2,2'-dihydrostilben |
| 18 | Gew.-% | 4-(4-Ethoxyphenylcyclohexyl)-pentan |
| 5,5 | Gew.-% | 4-Phenylcyclohexylpentan |
| 2 | Gew.-% | 4-Butylperhydrostilben-4'-carbonsäure-4-cyanophenylester |

wurden folgende Farbstoffe gelöst:

| | |
|---|---|
| 0,7 Gew.-% | 1,4,5,8-Tetraamino-2,7-di-(4-methylphenoxy)-anthrachinon |
| 0,7 Gew.-% | 1,4,5,8-Tetraamino-2,7-di-phenoxy-anthrachinon |
| 0,3 Gew.-% | 1-Amino-5,8-tetrahydronaphthylthio-anthrachinon |
| 0,3 Gew.-% | 1-Amino-5,8-p-tolylthioanthrachinon |
| 0,5 Gew.-% | 4-(4-Benzyloxyphenylazo)-phenylazo-4'-(4-oxyphenylazo)-2,2'-dichlordiphenyl |
| 0,1 Gew.-% | 1,4-Diamino-2-(4-propyloxycarbonyl)-phenoxy-anthrachinon |

Man erhält eine tiefschwarze Lösung mit den Ordnungsgraden 0,74 (395 nm), 0,76 (592 nm) und 0,75 (633 nm).

Man füllt eine Schaltzelle handelsüblicher Bauart, mit In-Sn-Oxid-Elektroden und einer Orientierungsschicht, die parallel zur langen Achse gerichtet ist. Die Schichtdicke beträgt 11,5 μ. Die Zelle wird in eine thermostatisierte Küvette gebracht und mit elektrischen Zuleitungen versehen.

Die Schaltspannung beträgt 10 V, 100 Hz. Gemessen wird die Helligkeitsänderung hinter der Zelle, die von vorne auftreffendes weißes polarisiertes Licht durch die Orientierung des Farbstoffs erfährt.

Es werden mit dieser Vorrichtung folgende Abklingzeiten (zwischen 90 bis 10 % Helligkeitänderung) gemessen. (Zeile a)

| | +20°C | 0°C | -20°C | | Schichtdicke |
|---|---|---|---|---|---|
| a) | 184 | 539 | 3 875 | m sec | 11,4 μ |
| b) | 131 | 392 | 2 201 | m sec | 11,8 μ |

Verwendet man eine Mischung obiger Zusammensetzung, die jedoch die Carbonsäureesterkomponenten nicht ehthält, so findet man in jeder Hinsicht gleiche Ordnungsgrade, Nuance und Farbstärke. Jedoch ist die Abklingzeit bei

niedrigen Temperaturen bedeutend erniedrigt (Zeile b) Diese Reduktion der Abklingzeit um 40 % ist gut reproduzierbar.

Der Klärpunkt der flüssigkristallinen Mischung beträgt im Beispiel a) ohne Farbstoff 86,8°C, im Beispiel b) mit Farbstoff aber ohne Ester 86,7°C.

## Patentansprüche

1. Farbstoffhaltiges flüssigkristallines Material zur Verwendung in Guest-Host-Anzeigen, das ein Gemisch von mindestens zwei Verbindungen, die eine nematische Phase positiver dielektrischer Anisotropie bilden, der allgemeinen Formel

$$R_1-(A_1)_m-Z_1-A_2-Z_2-(A_3)_n-R_2 \qquad I$$

enthält, wobei

$R_1$, $R_2$ $C_1$-$C_{10}$-Alkyl, das durch 1 oder 2 O-Atome unterbrochen sein kann, $C_1$-$C_{10}$-Alkoxy, das durch 1 oder 2 O-Atomen unterbrochen sein kann, F, Cl, Br, -CN, $-CF_3$, $-NO_2$

$A_1$, $A_2$, $A_3$ gegebenenfalls substituierte 1,4-Phenylen-, 1,4-Cyclohexylen-, 1,3-Dioxan-2,5-diyl-, Piperidin-1,4-diyl-, 1,4-Bicyclo-[2,2,2]-octylen- und Pyrimidin-2,5-diyl-Gruppen,

$Z_1$, $Z_2$ eine direkte Bindung, $-O-\underset{\underset{O}{\parallel}}{C}-$, $-\underset{\underset{O}{\parallel}}{C}-O-$,

$-CH_2O-$, $-OCH_2-$, $-CH_2CH_2-$,

m 1 und 2 sowie

n 0 und 1 bezeichnen, wobei für m = 2 die beiden Gruppen $A_1$ gleich oder verschieden sind, dadurch gekennzeichnet, ist, daß das Gemisch 10-60 Gew.-% mindestens einer cyangruppenhaltigen Verbindung und 0-1 Gew.-% gegebenenfalls mindestens einer estergruppenhaltigen Verbindung enthält.

2. Flüssigkristallines Material gemäß Anspruch 1, dadurch gekennzeichnet, daß das Gemisch 20-40 Gew.-% mindestens einer cyangruppenhaltigen Verbindung enthält.

3. Flüssigkristallines Material gemäß den Ansprüchen 1 und 2, dadurch gekennzeichnet, daß das Gemisch keine estergruppenhaltige Verbindung oder maximal 0,5 Gew.-% mindestens einer estergruppenhaltigen Verbindung enthält.

4. Flüssigkristallines Material gemäß den Ansprüchen 1-3, dadurch gekennzeichnet, daß bei den Verbindungen der Formel I die Gruppen $A_1$, $A_2$, $A_3$ durch 1, 2, 3 oder 4 F-Atome, Cl-Atome, Br-Atome, -CN- oder $-CF_3$-Gruppen substituiert sind.

5. Flüssigkristallines Material gemäß den Ansprüchen 1-4, dadurch gekennzeichnet, daß es ein Gemisch aus mindestens einer Verbindung der Formeln

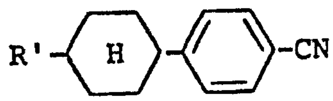

II

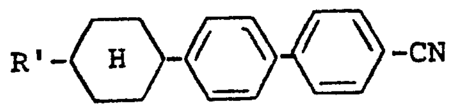

III

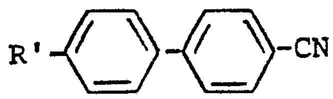

IV

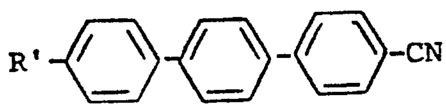

V

und mindestens einer Verbindung der Formel

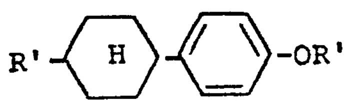

VI

enthält.

6. Flüssigkristallines Material gemäß den Ansprüchen 1-5, dadurch gekennzeichnet, daß es einen Azofarbstoff enthält.

7. Flüssigkristallines Material gemäß den Ansprüchen 1-6, dadurch gekennzeichnet, daß es einen Anthrachinonfarbstoff der Formel

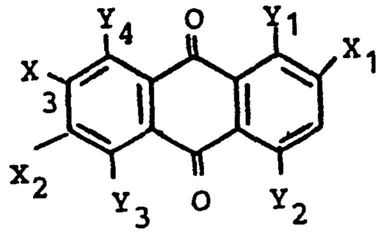

enthält,

in der

$Y_1$, $Y_2$, $Y_3$, $Y_4$ Wasserstoff, Halogen, Nitro, Amino, Alkylamino, Arylamino, Acylamino, Cycloalkylamino, Aralkylamino, Alkoxy, Cycloalkoxy, Aryloxy, Aralkoxy, Alkylthio, Cycloalkylthio, Arylthio, Aralkylthio, Hydroxy oder Mercapto, wobei die genannten Kohlenwasserstoffreste substituiert sein können, mit der Maßgabe, daß mindestens einer der Substituenten $Y_1$-$Y_4$ $\neq$ H ist,

$X_1$, $X_2$, $X_3$ Wasserstoff, Halogen, $-T_1$, $-OT_1$, $-ST_1$, -CN, $-CF_3$, $-COZT_1$,

Z -O- oder -NH-,

$T_1$ gegebenenfalls substituiertes Alkyl, wobei die Alkylkette durch ein O-Atom oder mehrere nicht nachbarständige O-Atome

unterbrochen sein kann, vorzugsweise $C_1$-$C_{10}$-Alkyl, das durch 1 oder 2 O-Atome unterbrochen sein kann, gegebenenfalls substituiertes Aryl, gegebenenfalls substituiertes Cycloalkyl, gegebenenfalls substituiertes Aralkyl, oder einen gegebenenfalls substituierten heterocyclischen Rest bezeichnen.

Europäisches Patentamt

# EUROPÄISCHER RECHERCHENBERICHT

0181601 Nummer der Anmeldung

EP 85114109.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | DE - A1 - 3 315 618 (SHARP K.K.)<br>* Zusammenfassung; Seite 23 *<br>-- | 1,5 | C 09 K 19/60<br>C 09 K 19/08 |
| A | CH - A5 - 636 371 (SECRETARY)<br>* Ansprüche 1-5 *<br>-- | 1,5 | |
| A | CH - A5 - 641 201 (SECRETARY)<br>* Zusammenfassung; Seite 4, Zeilen 26-60 *<br>-- | 1,5 | |
| A | DE - A1 - 2 850 923 (THOMSON)<br>* Anspruch 1 *<br>-- | 1 | |
| A | DE - A1 - 2 913 753 (HITACHI)<br>* Seite 22, Zeile 8 - Seite 23 *<br>-- | 1,6 | RECHERCHIERTE SACHGEBIETE (Int Cl 4) |
| A | US - A - 4 376 715 (COGNARD)<br>* Zusammenfassung *<br>-- | 1,7 | C 09 K |
| A | EP - A1 - 0 026 004 (BBC BROWN)<br>* Zusammenfassung *<br>---- | 1,7 | |

Der vorliegende Recherchenbericht wurde für alle Patentansprüche erstellt

| Recherchenort | Abschlußdatum der Recherche | Prüfer |
|---|---|---|
| WIEN | 17-02-1986 | WILFLINGER |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82